# EUROPEAN PATENT APPLICATION

(11) **EP 1 405 817 A1**
(43) Date of publication of application: **07.04.2004**
(21) Application number: 03078106.6
(22) Date of filing: 30.09.2003
(51) Int. Cl.: B66C 23/44, B60P 1/54

(54) **Telescopic, collapsible and extractable crane to be installed on transportation means for the loading and unloading of materials**

(30) Priority: 04.10.2002 IT MI20022114; 13.11.2002 IT MI20020526 U
(71) Applicant: San Marco International S.r.l., 28021 Borgomanero - Novara - (IT)
(72) Inventor: Cerutti Carlo, 28021 Borgomanero (IT)
(74) Representative: De Gregori, Antonella

(57) **Abstract**

A telescopic, collapsible and extractable crane to be installed on transportation means for the loading and unloading of materials, comprising a stanchion (1) and a telescopic arm (2), a cable (31), which winds, at one end, onto a drum of a hoist (29) and which, at the other end, carries a hooked element (32, 38) and which slides on pulleys (27, 28), the stanchion (1) being rotatable and being arranged extractably in a tubular support (7) fixed to and integral, in a lower part thereof, with a caisson or plane (8) of a means of transportation (51). Moreover, the stanchion (1) foresees a lower part (4) which can be inserted in the tubular support (7), an intermediate part (5) consisting of profiles and an upper part which foresees a shaped plate (6), the shaped plate (6) foreseeing a horizontal hinging (3) about which a first portion (15) of the telescopic arm (2) can oscillate, foreseeing engagement means (23, 25, 26) to determine the inclination of the arm (2) with respect to the stanchion (1) in a vertical plane.

## Description

The present invention refers to a telescopic, collapsible and extractable crane to be installed on transportation means for the loading and unloading of materials.

Various types of lifting means are known which, as an alternative to purely manual completion of such operations, are normally used for the loading and unloading of unitised materials and not from the load planes of motor vehicles. To carry out such operations self-propelled means can be used normally equipped with wheels or fixed setting means such as fork-lift trucks which move up to the vehicle or travelling crane or jib crane in whose radius of action the vehicle must be positioned; alternatively, it is the motor vehicle itself that can be equipped with its own crane, normally actuated by oleohydraulic actuators, stably fixed to the loading plane of the vehicle which can be unfolded in the use step and then folded back up again.

The practical limitations of use suffered by the known lifting means indicated above are equally known and clear. In the case of use of fork-lift trucks or cranes, such means must always be available both in the loading point and in the unloading point; so, if in the location where the loading is carried out, be it a factory or a warehouse, a lifting means is normally available, it is very often the case that in the location where the unloading is carried out, for example an unequipped building site, a small business or a private home, a lifting means is not available and unloading must be carried out manually. In the case of a crane stably installed on the loading plane of the motor vehicle, on the other hand, there is the disadvantage of the loss in useful space for loading due to the bulk of the collapsed crane, the loss of loading capacity of the vehicle due to the weight of the crane and of the devices which actuate it and the usually high cost of the lifting means at time disproportionate with respect to the relatively low weight of the loads to be lifted.

The purpose of the present invention is therefore that of defining a different solution to the various technical problems quoted above.

To further simplify the crane realised according to the present invention, the load-lifting function can be carried out by a manually actuated hoist or by a hoist equipped with a continuous current electric motor, which can be connected to and supplied with energy from the battery of the vehicle.

However, this type of crane also does not allow its use as a traction winch on tilted planes or loading ramps for moving small means from the ground onto the plane of the vehicle and/or vice-versa. Indeed, the practical difficulties encountered are known, for example in a building site, when a small mean equipped with wheels has to be loaded onto the loading plane of a motor vehicle along a loading ramp.

To carry out such an operation it is necessary for the motor vehicle to be equipped with a winch, normally actuated by a hydraulic motor connected to the hydraulic unit of the motor vehicle, on the drum of which a cable is wound which, attached to the means equipped with wheels, allows it to be pulled on the ground and along a loading ramp situated between the ground and the surface of the loading plane of the motor vehicle.

Another purpose of the present invention is therefore that of eliminating such drawbacks easing the loading and/or unloading of such a motor vehicle, without, however, having to have dedicated expensive and bulky apparatuses.

These and other purposes according to the present invention are accomplished by realising a telescopic, collapsible and extractable crane to be installed on transportation means for the loading and unloading of materials as outlined in the attached claim 1.

Further relevant characteristics and details of the present invention are the object of the dependent claims.

Advantageously, a small collapsible crane, with a telescopic and collapsible arm and with a stanchion which can be extracted from the support base fixed to the plane of the motor vehicle according to the invention is particularly simplified and cost-effective. Moreover, it allows, when necessary, the availability of a lifting apparatus of a suitable size and load capacity when unfolded, of low bulk when folded up, with the possibility of being extracted and removed from the support base, with simple and valid operation, with easy use and low maintenance costs. To further simplify the crane realised according to the present invention, the load-lifting function can be carried out by a manually actuated hoist or by a hoist equipped with a continuous current electric motor, which can be connected to and supplied with energy from the battery of the vehicle.

The characteristics and the advantages of a telescopic, collapsible and extractable crane to be installed on transportation means for the loading and unloading of materials according to the present invention shall become clearer from the following description, given as a non-limiting example, of an embodiment with reference to the attached figures in which:
Figure 1 is a top side schematic view of a transportation vehicle on the loading plane of which a crane according to the invention is installed in use position with the telescopic arm extracted as far as it can be and slewed according to the axis of the vehicle with the different configurations in which the arm can be raised highlighted and with the lifting hook at the upper end stop,
Figure 2 is a schematic view from the rear of the same vehicle with the crane slewed in a direction perpendicular to the axis of the vehicle and with the lifting hook at the lower end stop,
Figure 3 is a schematic view from the rear of the vehicle with the crane having the telescopic arm slotted away, collapsed with minimum elevation and slewed in a direction perpendicular to the axis of the vehicle,
Figure 4 is a top side schematic view of the vehicle with the crane in the same configuration represented in figure 3,
Figure 5 is an enlarged top side view of the crane of the invention in use position with the telescopic arm at maximum extraction,
Figure 5a is a detail of an alternative embodiment of the block,

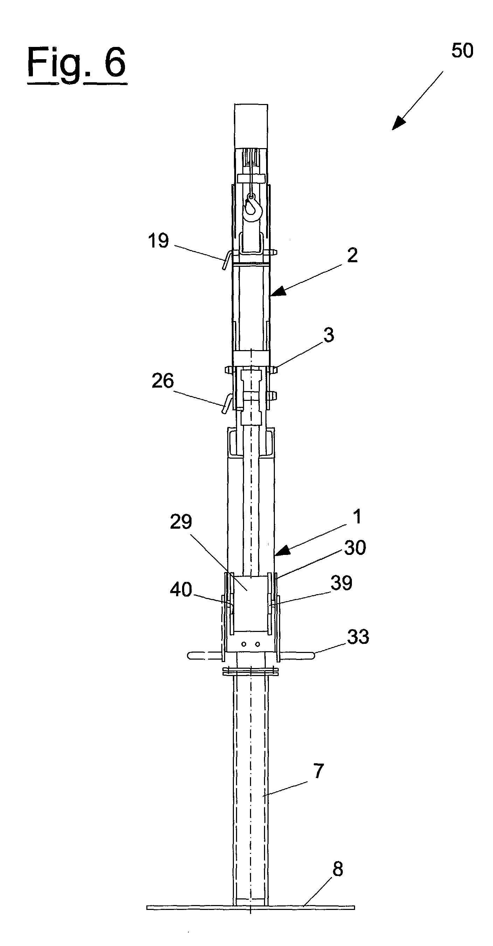

Figure 6 is a front view of the crane of the invention in the same position as in figure 5,
Figure 7 is an enlarged top side view of the crane collapsed with the telescopic arm slotted away in transportation position,
Figure 8 is a top view of a transportation vehicle on the loading plane of which a collapsible and extractable crane is installed equipped with supplementary equipment according to the invention, and

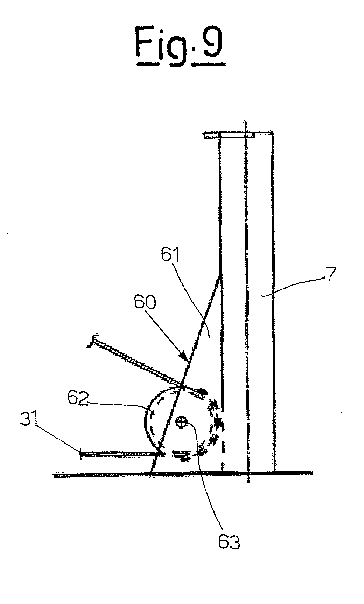

Figure 9 is an enlarged view of a detail of figure 8.

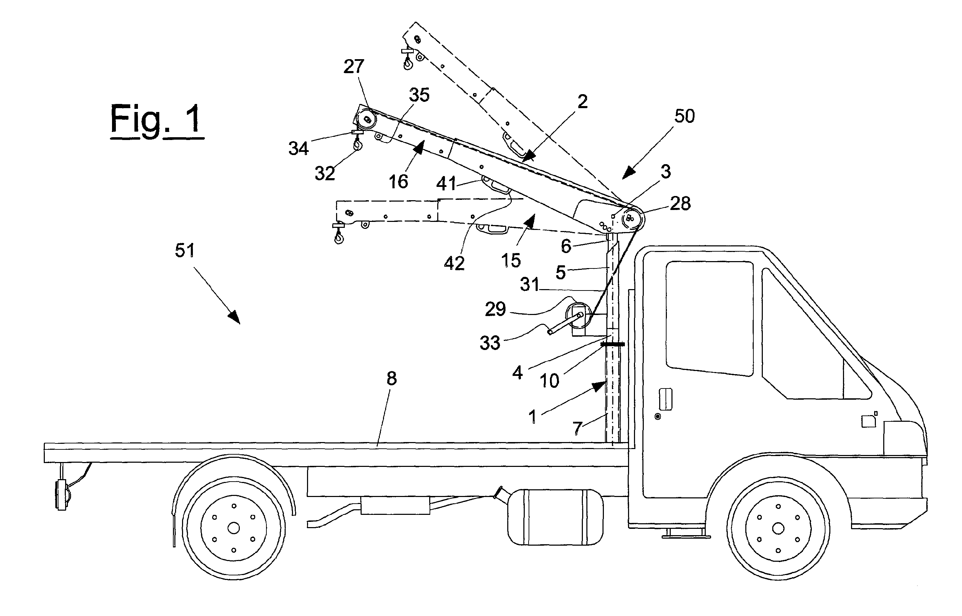

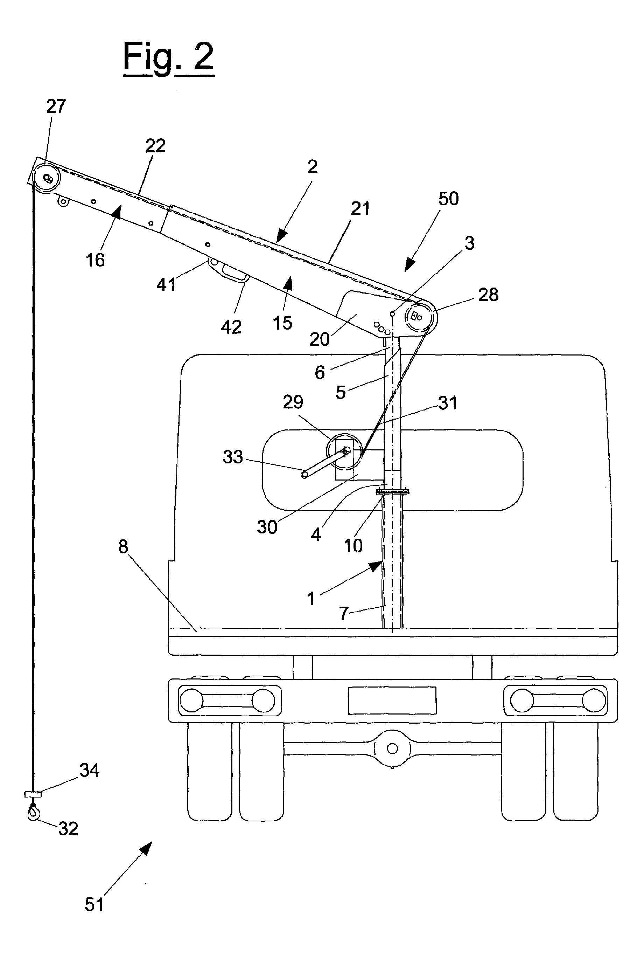

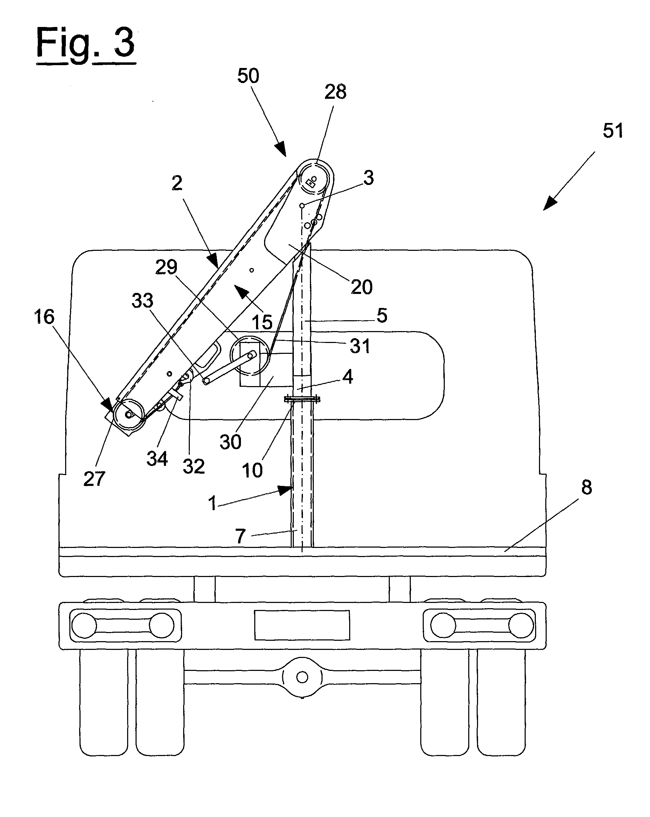

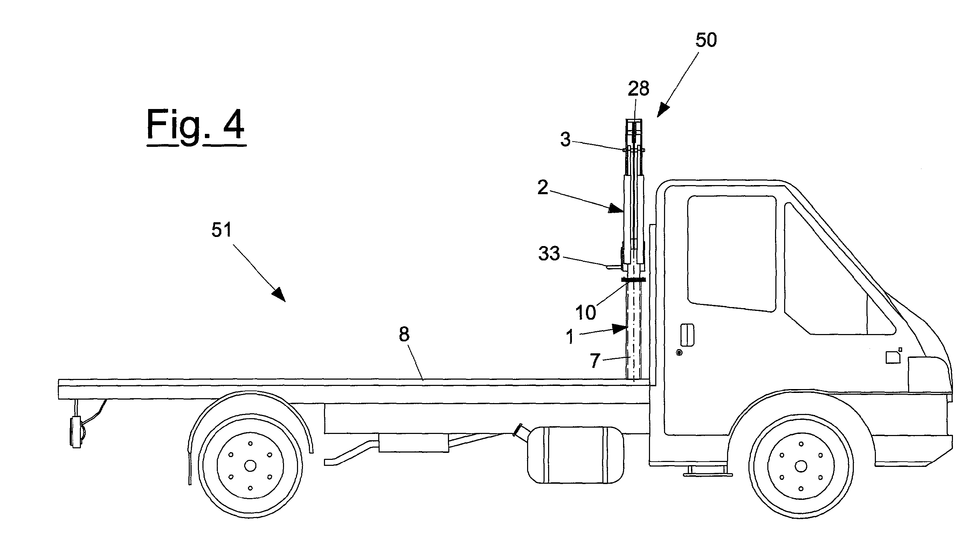

With reference to figures 1-4, a crane 50 of the invention is shown applied to a transportation vehicle 51 on a loading plane 8 of which it is installed.

Figure 1 shows the crane in use position, with a telescopic arm 2 at maximum extraction and slewed with the different configurations in which the arm can be raised highlighted.

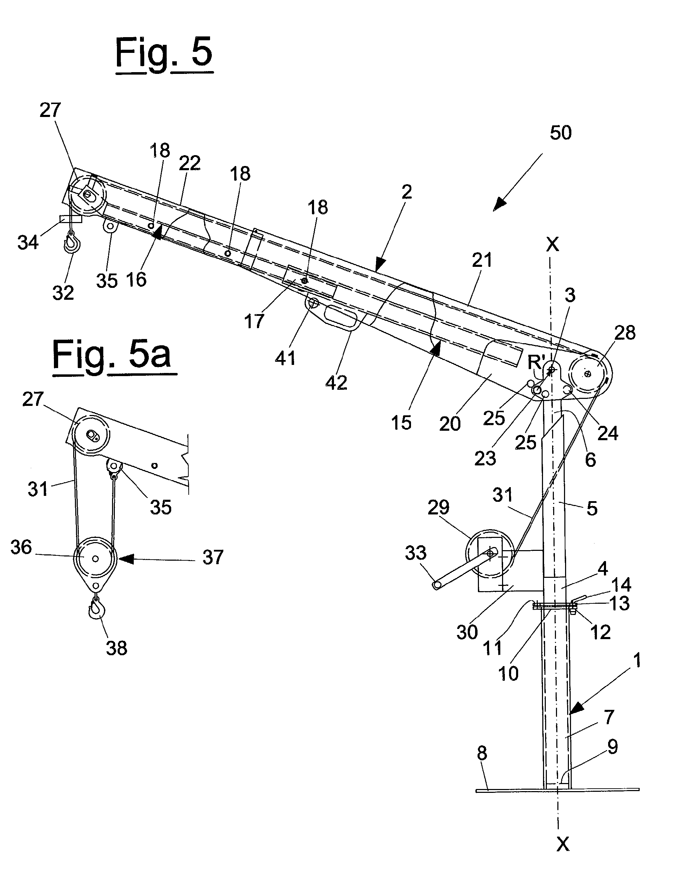

As shown in figure 5, the crane 5 essentially consists of a vertical stanchion 1 and a telescopic arm 2 hinged together at a horizontal hinging 3. The vertical stanchion 1 consists, in its lower part, of a round pipe 4, in its intermediate part 5, of profiles and, in its upper part, of a suitably shaped plate 6. The lower part 4 of the stanchion 1 is slotted into the round support pipe 7 having an inner diameter slightly greater than the outer diameter of the round pipe 4 of the stanchion 1. The support pipe 7 is fixed to and integral in its lower part with the caisson or plane 8 of the vehicle 51 and has its longitudinal axis perpendicular to the plane of the caisson of the vehicle. The lower end of the round pipe 4, when slotted into the support tube 7, abuts on a base plate 9 inserted in the round pipe 7 and integral with its lower end so that the stanchion 1 can be made to rotate freely about the vertical axis X of the pipe 7 and of the stanchion 1 itself. On the upper end of the support pipe 7 and in a plane perpendicular to the axis X a plate 10 is fixed and integral with said support pipe 7. The plate 10 preferably carries, near to its outer perimeter, a hole 12 having the axis parallel to the axis X and a certain distance from it; near to the upper part of the round pipe 4 of the stanchion 1 is fixed and integral, in a suitable position facing the plate 10, a plate 11, preferably having near to its outer perimeter at least one or more holes 13 arranged along a circumference of the same radius on which the hole 12 is made (therefore coaxial with the hole 12 of the plate 10 and of a diameter equal to the diameter of the hole 12). By inserting a pin 14 between the hole 12 of the plate 10 and one of the one or more holes 13 of the plate 11, the rotation of the stanchion 1 with respect to the support pipe 7 about the vertical axis X is prevented. The telescopic arm 2 is made up of a first portion 15, consisting of a tubular element, in which a second portion 16, consisting of a tubular element with a smaller section, can telescopically slide in the direction of the longitudinal axis. The first portion 15 carries a hole 17 near to one of its ends, whereas the second portion 16 carries two or more holes 18 with a diameter equal to the diameter of the hole 17 and suitably spaced apart. The holes 18 are arranged along the same longitudinal axis of the first portion 16 of the arm and have their axis parallel to the axis of the hole 17 so that by inserting a pin 19 between the hole 17 of the first portion 15 and one of the two or more holes 18 of the second portion 16 the telescopic sliding of the second portion 16 is prevented. The second portion 16 is thus locked in a position of greater or lesser extraction with respect to the portion 15. A series of engagement elements (17, 18), which can be aligned in a series of different positions to receive a locking element or pin 19 of the mutual position selected, is thus realised.

Two upside-down U-shaped fairing structures 21 and 22 are integral, respectively, with the first and second portion of the telescopic arm so that by slotting/extracting the second portion of the arm 16 into/from the first portion of the arm 15, the fairing element 22 also slots into or extracts from the fairing element 21.

The end of the first portion 15 opposite the end carrying the hole 17 is fixed to and integral with a pair of plates 20 which, thanks to the horizontal hinging 3, allow the rotation of the first and second portion of the arm with respect to the plate 6 of the stanchion 1 about the horizontal axis of the hinging 3. The plate 6 carries, at a suitable distance R' from the hinging axis 3, a hole 23 with its axis parallel to the hinging axis 3. Moreover, the plate 6 carries, in a symmetrical position with respect to the vertical axis X and at a distance R' from such an axis, a second hole 24 having its axis parallel to the hinging axis 3 and with a diameter equal to the diameter of the hole 23. The plates 20 carry, arranged along an arc of circumference with its centre in the hinging axis 3 and radius R', one or more holes 25 having the same diameter as the holes 23 and 24.

By inserting a pin 26 between the hole 23 or the hole 24 of the plate 6 and one of the one or more holes of the plates 20, the rotation of the plates 20 with respect to the plate 6 about the hinging 3 is prevented. Consequently, by inserting the pin 26 between the hole 23 and one of the one or more holes 25 it is possible to lock the rotation of the arm 2 with respect to the stanchion 1 about the hinging 3, with variable elevation and in a number of positions with the arm raised equal to the number of holes 25.

Equally, by inserting the pin 26 between the hole 24 and one of the one or more holes 25, it is possible to lock the rotation of the arm 2 with respect to the stanchion 1 about the hinging 3, with variable lowering and in a number of positions with the arm lowered equal to the number of holes 25. Engagement means (23, 25, 26) are thus realised to determine the inclination of the arm 2 with respect to the stanchion 1 in a vertical plane.

On the end of the second portion of the arm 16 opposite to the end slotted into the first portion of the arm 15, a conventional pulley 27 is hinged with its axis parallel to the hinging axis 3; a second conventional pulley 28 is hinged on the plates 20 of the telescopic arm 2 on the opposite side to the first portion 15 and the second portion 16 with respect to the axis X. A hoist 29, represented as manually actuated for illustrating and not limiting purposes and equipped with friction able to support the loads lifted, is fixed in a suitable position on a support 30 integral with the stanchion 1. A cable 31, one of the ends of which is fixed with conventional means to the drum of the hoist 29, winds around throats of the pulleys 28 and 27 and passes into the hole of a conventional counterweight 34, the other end of the cable being fixed with conventional means to a hook 32; by rotating the hoist 29 in one direction through the handle 33, the cable 31 unwinds from the drum of the hoist 29 and the hook 32 with the counterweight 34 descends whereas by rotating the hoist 29 in the opposite direction through the handle 33, the cable 31 winds up onto the drum of the hoist 29 and the hook 32 with the counterweight 34 rises, with this realising the lifting or dropping of loads that may be hung on the hook 32. By locking the extraction of the second portion 16 of the telescopic arm 2 with respect to the first portion 15 inserting the pin 19 between the hole 17 of the first portion 15 and one of the holes 18 of the second portion 16, different lengths of the telescopic arm 2 are realised; by locking the rotation of the telescopic arm 2 with respect to the stanchion 1 about the hinging 3 inserting the pin 26 between the hole 23 of the plate 6 and one of the one or more holes 25 of the plates 20 different elevation positions of the arm 2 are realised; by locking the rotation of the stanchion 1 with respect to the support pipe 7 about the axis X inserting the pin 14 between the hole 12 of the plate 10 and one of the holes 13 of the plate 11 different slewed positions of the crane are realised with respect to the support pipe 7 and to the plane 8 of the vehicle with which the support pipe 7 is integral.

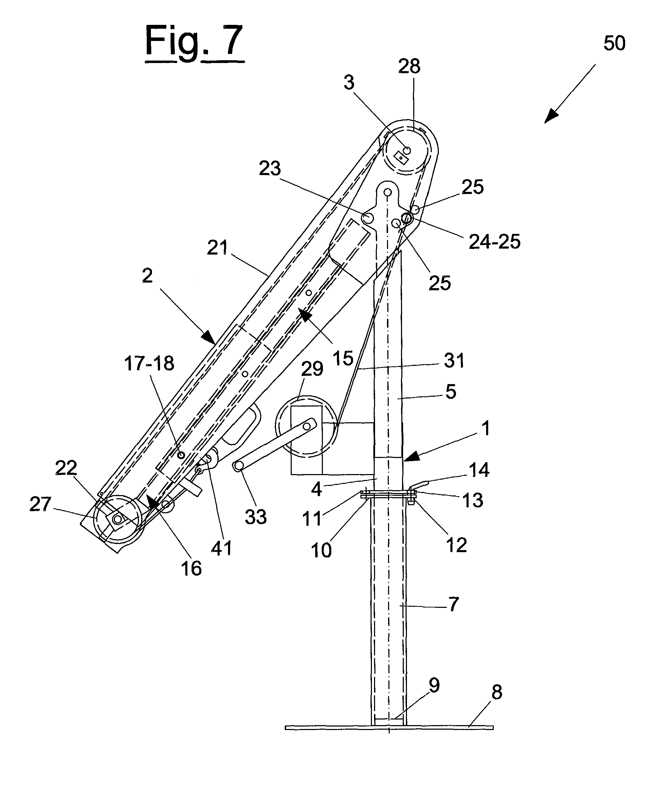

The crane can, therefore, be used to carry out the lifting of loads with different lengths and inclinations of the arm 2 and with the possibility of rotating or being locked in a plane perpendicular to the axis X. Moreover, in particular cases, in order to reduce the force that is necessary to exert on the handle 33 to lift the loads, it is possible to attach the hook to the base of the support 35 (figure 5a) integral with the end of the second portion of the arm 16. By inserting the cable 41 in the throat of a pulley 36 of a conventional block 37, a load hung on the hook 38 can be lifted with two bearer portions of cable, reducing the traction on the cable 31 by half. In order to allow the easy actuation of the handle 33 of the hoist 29, the handle 33 is extractable from the coupling 39 on the right hand side of the entry drum of the hoist 29 and can be slotted into the coupling 40 on the left hand side of the same entry drum of the hoist 29. The hoist 29, represented for illustrating purposes with manual actuation, can also be actuated by a motor, preferably using continuous electric current supplied by the battery of the means on which the crane is installed, and commanded through a pendant keypad. The extraction of the telescopic portion 16 of the arm 2 and the raising of the arm 2 from the transportation position represented in figure 7 to the use position represented in figure 5 are commanded by the hoist 29; in the same way the slotting away of the telescopic portion 16 of the arm 2 and the lowering of the arm 2 from the use position to the transportation position are commanded by said hoist 29. Considering the crane in the use position represented in figure 5, it is necessary to attach the hook 32 in the hole 41 of the plate 42 integral with the first telescopic portion of the arm 15; placing the cable 31 under traction by winding it onto the drum of the hoist 29, the telescopic arm 2 tends to rotate upwards about the hinging 3 and this allows the pin 26 inserted between the hole 23 of the plate 6 of the vertical stanchion 1 and one of the one or more holes 25 of the plates 20 of the telescopic arm to be extracted; loosening the cable 31 by unwinding it from the drum of the hoist 29, the telescopic arm 2 lowers rotating about the hinging 3 until it allows the locking of the rotation of the arm 2 about the hinging 3 by inserting the pin 26 between the hole 24 of the plate 6 and one of the one or more holes 25 of the plates 20. By slightly loosening the traction of the cable 31, it is possible to extract the pin 19 which locks the extraction of the second portion 16 of the arm 2 with respect to the first portion of arm 15; once again placing the cable 31 under traction and winding it upon the drum of the hoist 29, the slotting back in of the second portion of arm 16 in the first portion of arm is commanded until the second portion 16 can be locked to the first portion 15 in the maximum slotted position. Inversely, considering the crane in the transportation position represented in figure 7, placing the cable 31 slightly under traction, it is possible to extract the pin 19 which locks the extraction of the second portion of the arm with respect to the first portion; then by slightly loosening the cable 31, the weight of the second portion of the arm determines the extraction of the second portion from the first portion until it can be locked in the desired extraction position by inserting the pin 19 between the hole 17 of the first portion 15 of arm and one of the holes 18 of the second portion 16. By placing the cable 31 under traction, winding it on the drum of the hoist 29, the telescopic arm 2 tends to rotate upwards about the hinging 3 and this allows the pin 26 inserted between the hole 24 of the plate 6 of the vertical stanchion 1 and one of the one or more holes 25 of the plates 20 of the telescopic arm to be extracted; it is, therefore, possible to wind the cable 31 on the drum of the hoist, lifting the arm 2 about the hinging 3 until it goes into the desired elevation position and thus locking the rotation by inserting the pin 26 between the hole 23 of the plate 6 and one of the one or more holes 25 of the plates 20. The crane with the arm slotted away and lowered can, if needed, easily be removed from the vehicle, by simply lifting the stanchion 1 and the arm 2 hinged to it and extracting the stanchion 1 from the round support pipe 7.

In this way a collapsible crane has been realised which can be quickly installed on a motor vehicle and also quickly removed when it is not necessary, even low in size and load capacity, that is particularly cost-effective and inexpensive, that is easy to use and with low maintenance costs.

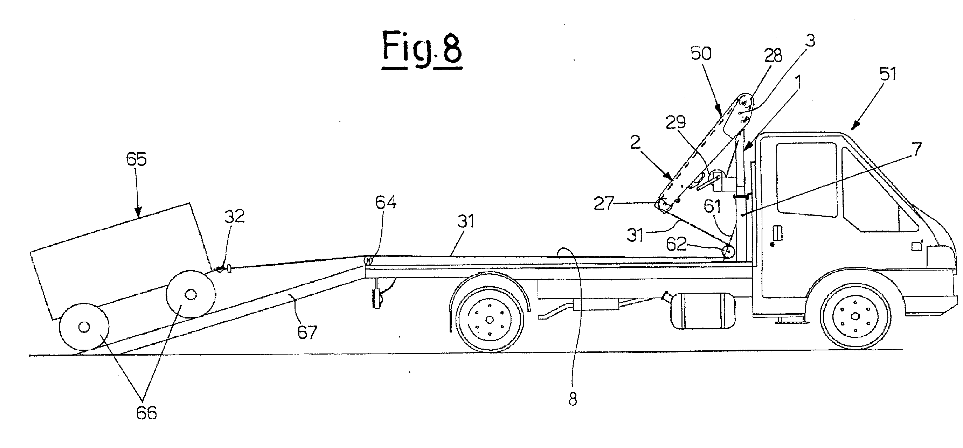

With reference to figure 8, the transportation vehicle 51 on the loading plane 8 of which the telescopic, collapsible and extractable crane 50 is installed, is shown, with the telescopic arm 2 slotted away, folded collapsed with minimum elevation and slewed in a direction parallel to the axis of the vehicle 51. In this embodiment, combined with it supplementary equipment 60 is foreseen which allows it to be easily used as a winch.

The supplementary equipment 60 essentially consists of a pair of metal plates 61 integral with the support pipe 7 in which the stanchion 1 of the extractable crane 50 is slotted.

A sheave 62 is arranged between the plates 61 and can rotate about an axis or hinging 63 perpendicular both to the vertical axis of the support pipe 7 and to the longitudinal axis of the vehicle.

The lifting cable 31 of the extractable crane 50 unwinds from the drum of the hoist 29, passes into the throat of the sheaves or pulleys 28, 27, and passing into the throat of the sheave 62 of the supplementary equipment 60 is sent towards the rear part of the motor vehicle. A counter roller 64 arranged in the rear part of the vehicle on the plane 8 allows the hook 32 at the end of the cable 31 to be attached to a small means 65 which is equipped with wheels 66 without the cable 31 sliding against the loading plane 8 of the motor vehicle 51.

By winding the cable 31 on the drum of the hoist 29, the means 65 equipped with wheels 66 is pulled along a collapsible ramp 67 until it is loaded on the plane 8 of the motor vehicle 51.

In this way it is not necessary to have a winch with a relative motor, reducing the costs and bulk.

Such supplementary equipment allows a particular use of the telescopic, collapsible crane and carries out the function of a traction winch on inclined planes or loading ramps.

Such equipment is not at all costly, is not very bulky and the collapsible crane, which is quick to install and remove on a motor vehicle, which is small in size and easy to use with minimum maintenance costs, has been kept.

Therefore, the purposes of the present invention have been accomplished.

## Claims

1. Telescopic, collapsible and extractable crane to be installed on transportation means for the loading and unloading of materials, comprising a stanchion (1) and a telescopic arm (2), a cable (31), which winds, at one end, onto a drum of a hoist (29) and which, at the other end, carries a hooked element (32, 38) and which slides on pulleys (27, 28), said stanchion (1) being rotatable, **characterised in that** said stanchion (1) is arranged extractably in a tubular support (7) fixed to and integral, in a lower part thereof, with a caisson or plane (8) of a means of transportation (51).

2. Telescopic crane according to claim 1, **characterised in that** said stanchion (1) foresees a lower part (4) which can be inserted in said tubular support (7), an intermediate part (5) consisting of profiles and an upper part which foresees a shaped plate (6), said shaped plate (6) foreseeing a horizontal hinging (3) about which a first portion (15) of said telescopic arm (2) can oscillate, foreseeing engagement means (23, 25, 26) to determine the inclination of said arm (2) with respect to said stanchion (1) in a vertical plane.

3. Telescopic crane according to claim 2, **characterised in that** said engagement means comprise at least one hole (23, 24), formed on said plate (6), arranged along an arc of circumference with a predetermined radius about the horizontal hinging (3) and able to be aligned with a series of holes (25) formed on a lower end of said arm (2; 15, 16) along an arc of circumference with its centre in the hinging (3) with a predetermined radius and having the same diameter as said at least one hole (23, 24), foreseeing a pin (26) that can be freely inserted in them.

4. Telescopic crane according to claim 1, **characterised in that** said arm (2) comprises at least one pair of tubular portions (15, 16), able to slide telescopically with each other, both of said portions (15, 16) foreseeing a series of engagement elements (17, 18) that can be aligned with each other in a series of different positions to receive a locking element (19) of the mutual position selected.

5. Telescopic crane according to claim 4, **characterised in that** said engagement elements (17, 18) are realised through holes and said locking element is realised through a pin (19) that can be freely inserted in said holes.

6. Telescopic crane according to claim 1, **characterised in that** said hoist (29) is arranged on a support (30) integral with said stanchion (1).

7. Telescopic crane according to claim 6, **characterised in that** said hoist (29) is of the type with a crank.

8. Telescopic crane according to claim 6, **characterised in that** said hoist (29) is actuated by an electric motor, which can be autonomous or able to be connected to a battery of said transportation means (51) .

9. Telescopic crane according to claim 2, **characterised in that** an upper end of said tubular support (7) foresees a first plate (10) equipped, near to its outer perimeter, with at least one hole (12), with its axis parallel to an axis (X) of rotation of the stanchion and at a certain distance from it, with there being foreseen integral with said lower part (4), able to be inserted in said tubular support (7), a second plate (11) having, near to its outer perimeter, at least one hole (13) which can be aligned with said hole (12) of said first plate (10), foreseeing a pin (14) that can be freely inserted in said holes (12, 13) to prevent the rotation of the stanchion 1 with respect to the tubular support (7) about said axis (X).

10. Telescopic crane according to claim 1, **characterised in that** it foresees supplementary equipment to be installed on transportation means (51) for the loading and unloading of material, where such a crane (50) foresees that said arm (2) be equipped with a horizontal hinging (3) about which it can oscillate to determine its inclination with respect to the stanchion (1) in a vertical plane, in which a pair of metal plates (61) carrying, on one axis (63), an idle sheave (62) on which said cable (31) can slide, is arranged integral with said support pipe (7).

11. Telescopic crane according to claim 10, **characterised in that** said axis or hinging (63) is perpendicular both to the vertical axis of said support pipe (7) and to a longitudinal axis of the vehicle (51) .

12. Telescopic crane according to claim 10, **characterised in that** it also foresees at least one counter roller (64) arranged in the rear part of the vehicle on the plane (8).

13. Telescopic crane according to claim 10, **characterised in that** said telescopic arm (2) of said telescopic, collapsible and extractable crane (50) is arranged slotted away, collapsed with minimum elevation and slewed in a direction parallel to the axis of the vehicle (51) until the activation of said equipment.
